# EUROPÄISCHE PATENTSCHRIFT

(11) **EP 2 619 557 B1**
(45) Veröffentlichungstag und Bekanntmachung des Hinweises auf die Patenterteilung: **11.05.2016**
(21) Anmeldenummer: 11761277.0
(22) Anmeldetag: 26.08.2011
(51) Int. Cl.: G01N 23/00, G01T 1/00, G01T 1/29, H01J 5/18

(54) **STRAHLUNGSEINTRITTSFENSTER FÜR EINEN STRAHLUNGSDETEKTOR**
RADIATION ENTRY WINDOW FOR A RADIATION DETECTOR
FENÊTRE D'ENTRÉE DE RAYONNEMENT POUR UN DÉTECTEUR DE RAYONNEMENT

(30) Priorität: 21.09.2010 DE 102010046100
(43) Veröffentlichungstag der Anmeldung: 31.07.2013
(73) Patentinhaber: Max-Planck-Gesellschaft zur Förderung der Wissenschaften e.V., 80539 München (DE); PNSensor GmbH, 80803 München (DE)
(72) Erfinder: SOLTAU, Heike, 80803 München (DE); SCHWEINFEST, Bianca, 86179 Augsburg (DE); LUTZ, Gerhard, 81739 München (DE); ANDRICEK, Ladislav, 82343 Pöcking (DE); STRUEDER, Lothar, 80803 München (DE)
(74) Vertreter: Beier, Ralph
(86) Internationale Anmeldenummer: PCT/EP2011/004289
(87) Internationale Veröffentlichungsnummer: WO 2012/038017

(56) Entgegenhaltungen:
- WO-A1-98/03353
- US-A- 5 039 203
- US-A- 5 173 612
- US-B1- 6 803 570

## Beschreibung

Die Erfindung betrifft ein Strahlungseintrittsfenster für einen Strahlungsdetektor, insbesondere für einen Halbleiterdetektor, wie beispielsweise einen Halbleiterdriftdetektor, einen Halbleiterpixeldetektor oder einen CCD-Detektor (CCD: Charge-coupled device).

Aus dem Stand der Technik sind Detektormodule bekannt, die zur Strahlungsmessung dienen und beispielsweise bei der Röntgenspektroskopie oder der Röntgenfluoreszenzanalyse eingesetzt werden können. Diese herkömmlichen Detektormodule enthalten einen Halbleiterdriftdetektor, der in einem Gehäuse hermetisch gekapselt angeordnet ist, so dass das Detektormodul auch in einer Schutzgasatmosphäre oder unter Vakuumbedingungen betrieben werden kann. Die zu detektierende Strahlung tritt hierbei durch ein Strahlungseintrittsfenster in das Gehäuse ein und trifft dann auf den innerhalb des Gehäuses angeordneten Halbleiterdriftdetektor. Bei den bekannten Detektormodulen der vorstehend beschriebenen Art besteht das Strahlungseintrittsfenster aus Beryllium oder aus einem Silizium-Gitter mit einer Polymerfolie.

Diese herkömmlichen Strahlungseintrittsfenster weisen jedoch verschiedene Nachteile auf. Zum einen sind diese herkömmlichen Strahlungseintrittsfenster sehr aufwendig in der Herstellung. Sie werden individuell Stück für Stück manuell gefertigt und öffnen sich so nicht den modernen Prozessmethoden einer Serienfertigung. Zum anderen kommt es bei solchen Strahlungseintrittsfenstern gelegentlich zu Problemen mit der Gasdichtigkeit, was insbesondere bei einem Betrieb unter schlechten Umweltbedingungen (z.B. Feuchtigkeit) zu Schädigungen bzw. Verschlechterungen der Detektoreigenschaften führen kann.

Aus JP 09 021 700 AA ist ein Strahlungseintrittsfenster für einen Infrarotsensor bekannt, wobei das Strahlungseintrittsfenster einen Fensterrahmen aus einem Harz aufweist.

Ferner ist zum Stand der Technik hinzuweisen auf DE 203 21 061 U1, DE 10 2005 046 164 A1 und JP 2002 36 5370 AA.

Weiterhin umfasst der Stand der Technik auch JP 06 289 145 AA. Diese Patentanmeldung offenbart ein Strahlungseintrittsfenster für Röntgenstrahlung mit einem aus Metall bestehenden Fensterrahmen.

Aus WO 98/03353 A1 und US 6 803 570 B1 ist jeweils ein Strahlungseintrittsfenster gemäß dem Oberbegriff des Anspruchs 1 sowie ein entsprechendes Herstellungsverfahren gemäß dem Oberbegriff des Nebenanspruchs bekannt.

Schließlich ist zum Stand der Technik noch hinzuweisen auf US 5 173 612 A und US 5 039 203 A.

Der Erfindung liegt deshalb die Aufgabe zugrunde, ein entsprechend verbessertes Strahlungseintrittsfenster zu schaffen. Insbesondere ist es im Rahmen der Erfindung wünschenswert, dass das Strahlungseintrittsfenster möglichst professionell mit modernen Prozessmethoden hergestellt werden kann und möglichst dünn und gasdicht ist.

Diese Aufgabe wird durch ein erfindungsgemäßes Strahlungseintrittsfenster gemäß dem Hauptanspruch gelöst.

Der Grundgedanke der Erfindung besteht in der quasi-monolithischen Kombination eines dünnen Fensterelements mit einem dicken Fensterrahmen, wobei der Fensterrahmen aus einem Halbleitermaterial (z.B. Silizium) besteht und mit Hilfe der bekannten Planartechnologie in einem Halbleiterprozess hergestellt ist.

Das erfindungsgemäße Strahlungseintrittsfenster weist deshalb ein flaches, dünnes Fensterelement auf, das für die von dem Strahlungsdetektor zu detektierende Strahlung mindestens teilweise durchlässig ist. Darüber hinaus weist das erfindungsgemäße Strahlungseintrittsfenster einen das Fensterelement seitlich einrahmenden Fensterrahmen auf, wobei der Fensterrahmen aus einem Halbleitermaterial besteht und wesentlich dicker ist als das dünne Fensterelement.

Hinsichtlich der räumlichen Anordnung des Fensterrahmens relativ zu dem dünnen Fensterelement bestehen im Rahmen der Erfindung verschiedene Möglichkeiten, die im Folgenden kurz beschrieben werden.

In einer Variante der Erfindung ist der Fensterrahmen im Wesentlichen auf der strahlungsabgewandten Innenseite des flachen Fensterelements angeordnet, so dass der Fensterrahmen das Fensterelement an der Innenseite abstützt. Diese Variante eignet sich insbesondere für einen Betrieb mit einem äußeren Überdruck bzw. einem inneren Unterdruck, da das dünne Fensterelement dann von außen gegen den Fensterrahmen gepresst wird.

In einer anderen Variante der Erfindung ist der Fensterrahmen dagegen im Wesentlichen auf der strahlungszugewandten Außenseite des flachen Fensterelements angeordnet, so dass der Fensterrahmen das dünne Fensterelement von außen abstützt. Diese Variante der Erfindung eignet sich insbesondere für einen Betrieb unter einem äußeren Unterdruck bzw. einem inneren Überdruck, da das dünne Fensterelement dann von innen gegen den außen befindlichen Fensterrahmen gepresst wird.

Die Erfindung ist jedoch hinsichtlich der räumlichen Anordnung des Fensterrahmens nicht auf die beiden vorstehend beschriebenen Varianten beschränkt. Beispielsweise ist es auch möglich, dass der Fensterrahmen das dünne Fensterelement sowohl an der Innenseite als auch an der Außenseite umgibt.

Weiterhin ist zu erwähnen, dass der Fensterrahmen im Querschnitt ein Profil aufweist, das verschiedene Formen aufweisen kann, wie im Folgenden kurz beschrieben wird.

In einer Variante der Erfindung verbreitert sich das Profil des Fensterrahmens von der strahlungsabgewandten Innenseite nach außen hin. Diese Variante der Erfindung eignet sich insbesondere für einen Betrieb unter einem äußeren Unterdruck oder einem inneren Überdruck.

In einer anderen Variante der Erfindung verbreitert sich das Profil des Fensterrahmens dagegen von der strahlungszugewandten Außenseite nach innen hin. Diese Variante der Erfindung eignet sich insbesondere für einen Betrieb unter einem inneren Unterdruck bzw. einem äußeren Überdruck.

Die Erfindung ist jedoch hinsichtlich des Profils des Fensterrahmens nicht auf die beiden vorstehend beschriebenen Varianten beschränkt.

Auch hinsichtlich des Aufbaus des flachen Fensterelements bestehen im Rahmen der Erfindung verschiedene Möglichkeiten, die im Folgenden kurz beschrieben werden.

In einer Variante der Erfindung besteht das flache Fensterelement aus einer einzigen Planarschicht, wobei es sich doch nicht um die bevorzugte Ausführungsform der Erfindung handelt.

In einem bevorzugten Ausführungsbeispiel der Erfindung besteht das dünne Fensterelement dagegen aus mehreren verschiedenen, übereinander liegenden Planarschichten, die aus unterschiedlichen Materialien bestehen und unterschiedliche Eigenschaften und Funktionen aufweisen können. Zum einen ist eine derartige Kombination mehrerer übereinander liegender Planarschichten vorteilhaft, um beispielsweise mikroskopische Undichtigkeiten in einer Planarschicht durch eine oder mehrere andere Planarschichten abzudecken. Zum anderen empfiehlt sich die Kombination mehrerer übereinander liegender Planarschichten jedoch auch wegen der erforderlichen Gasdichtigkeit und zur Unterdrückung von optischem Licht bei gleichzeitiger Durchlässigkeit für die zu detektierende Strahlung (z.B. Röntgenstrahlung).

Hinsichtlich des Materials der mindestens einen Planarschicht bestehen verschiedene Möglichkeiten, die in beliebiger Kombination eingesetzt werden können. So können die Planarschichten beispielsweise aus Siliziumdioxid (SiO2), Siliziumnitrid (Si3N4), Cyclotene™ (BCB: Bis-Benzocyclobuten), Ormocer (Organically modified ceramics), Polyimide (Kapton) oder allgemein aus organischem oder anorganischem Material,wobei auch ein Halbleitermaterial möglich ist. Im Allgemeinen kann man sagen, dass es sich vorzugsweise entweder um in einem LPCVD-Prozess (LPCVD: Low pressure chemical vapor deposition) oder PECVD-Prozess (PECVD: Plasma-enhanced chemical vapor deposition) aufgewachsene Schichten handelt, oder um aufgedampfte oder gesputterte Layer oder um Polymere handelt, die in Harzform auf einen Wafer aufgebracht (z.B. aufgeschleudert) werden, durch Licht und/oder Wärme vernetzen und so eine Art Folie bilden, die sehr gut an der Waferoberfläche haftet.

Darüber hinaus kann eine Beschichtung aus DLC (Diamond Like Carbon) verwendet werden. Dabei handelt es sich um eine aufgesputterte Schicht Kohlenstoff mit vorwiegend sp3-Verbindungen. Eine solche DLC-Schicht kann alleine oder in Verbindung mit einer Nitridschicht verwendet werden.

Bei einer Kombination mehrerer Planarschichten bestehen die einzelnen Planarschichten jedoch vorzugsweise aus unterschiedlichen Materialien.

Bei einem Strahlungseintrittsfenster mit einer kleinen Fensteröffnung genügt ein einfacher Fensterrahmen, da das dünne flache Fensterelement dann aufgrund der geringen Größe der Fensteröffnung mechanisch nicht abgestützt werden muss.

Bei einer größeren Fensteröffnung ist es dagegen vorteilhaft, wenn das flache Fensterelement durch mindestens einen Stützsteg mechanisch abgestützt wird, wobei der Stützsteg das Fensterelement in mehrere Fensteröffnungen unterteilt.

Bei sehr großen Fensteröffnungen ist es auch möglich, dass entsprechend viele Stützstege gitterförmig angeordnet sind und das flache Fensterelement in eine Vielzahl von Fensteröffnungen unterteilen, wobei die Stützstege vorzugsweise rechtwinklig angeordnet sind.

Vorzugsweise ist der Stützsteg hierbei monolithisch mit dem Fensterrahmen und quasimonolithisch mit dem Fensterelement verbunden, was durch eine gemeinsame Herstellung in Planartechnologie bedingt wird. Weiterhin ist in diesem Zusammenhang zu erwähnen, dass der Stützsteg vorzugsweise aus dem selben Halbleitermaterial besteht wie der Fensterrahmen.

Hinsichtlich der räumlichen Anordnung des mindestens einen Stützstegs in Bezug auf das flache Fensterelement bestehen wieder verschiedene Möglichkeiten, die im Folgenden kurz beschrieben werden.

In einer Variante der Erfindung befindet sich der Stützsteg auf der strahlungsabgewandten Innenseite des Fensterelements, was insbesondere bei einem Betrieb unter einem äußeren Überdruck bzw. einem inneren Unterdruck sinnvoll ist, da das flache Fensterelement dann von außen gegen den dünnen Stützsteg gepresst wird.

In einer anderen Variante der Erfindung ist der Stützsteg dagegen auf der strahlungszugewandten Außenseite des flachen Fensterelements angeordnet, was insbesondere bei einem Betrieb unter einem äußeren Unterdruck bzw. einem inneren Überdruck sinnvoll ist, da das flache Fensterelement dann aufgrund der Druckverhältnisse von innen gegen den Stützsteg gepresst wird.

In jedem Fall aber befindet sich der Stützsteg vorzugsweise auf derselben Seite des dünnen Fensterelements wie der Fensterrahmen.

Auch hinsichtlich der Querschnittsform des Stützstegs bestehen im Rahmen der Erfindung verschiedene Möglichkeiten, die im Folgenden kurz beschrieben werden. Aufgrund der Herstellungsweise im Rahmen der Planartechnologie weist der Stützsteg in der Regel einen Querschnitt auf, der sich zu dem flachen Fensterelement hin verbreitert. Es ist jedoch alternativ auch möglich, dass der Stützsteg einen Querschnitt aufweist, der im Wesentlichen rechteckig ist. Es ist jedoch zu erwähnen, dass die Erfindung hinsichtlich des Querschnitts des Stützstegs nicht auf die vorstehend beschriebenen Beispiele beschränkt ist.

Ferner ist zu erwähnen, dass das Halbleitermaterial des Fensterrahmens und/oder des Stützstegs vorzugsweise Silizium ist. Die Erfindung ist jedoch hinsichtlich des Halbleitermaterials für den Fensterrahmen bzw. die Stützstege nicht auf Silizium beschränkt, sondern grundsätzlich auch mit anderen Halbleitermaterialien realisierbar.

Weiterhin ist zu erwähnen, dass das Strahlungseintrittsfenster und insbesondere das dünne, flache Fensterelement vorzugsweise im Wesentlichen gasdicht ist, um einen Betrieb in einer Schutzgasatmosphäre oder unter Vakuumbedingungen zu ermöglichen.

Darüber hinaus kann das Strahlungseintrittsfenster eine Filterfunktion aufweisen, indem das Strahlungseintrittsfenster für optische Strahlung, insbesondere in einem für den Menschen sichtbaren Wellenlängenbereich, im Wesentlichen undurchlässig ist, wohingegen das Strahlungseintrittsfenster für die zu detektierende Strahlung (z.B. Röntgenstrahlung) im Wesentlichen durchlässig ist.

Die Erfindung umfasst jedoch nicht nur das vorstehend beschriebene erfindungsgemäße Strahlungseintrittsfenster als einzelnes Bauteil, sondern erstreckt sich auch auf ein komplettes Detektormodul mit einem Strahlungsdetektor, der in einem Gehäuse gekapselt ist, wobei die zu detektierende Strahlung durch das Strahlungseintrittsfenster in das Gehäuse eintritt und dort auf den Strahlungsdetektor fällt.

Dabei ist es das Ziel, die optimale Performance des gesamten Detektormoduls, zu erreichen durch die gegenseitige Abstimmung der beiden Planarprozesse in der Detektor- und Fensterherstellung, z.B. hinsichtlich der aufgebrachten Schichten auf dem Strahleneintrittsfenster des Moduls und der Architektur des Strahleneintrittsfensters des Detektors. Beispielsweise kann die Lichtdichtigkeit sowohl durch aufgebrachte A-luminiumschichten auf dem Modul als auch auf dem Detektor erzielt werden und diese können aufeinander abgestimmt werden.

Bei einem solchen Detektormodul ist das Strahlungseintrittsfenster vorzugsweise durch eine Klebe- oder Schweißverbindung mit dem Gehäuse des Detektormoduls verbunden, wobei die Verbindung den Fensterrahmen und/oder das flache Fensterelement erfassen kann.

Hierbei weist das Gehäuse des Detektormoduls für das Strahlungseintrittsfenster eine Gehäuseöffnung mit einem umlaufenden Rand auf, wobei das erfindungsgemäße Strahlungseintrittsfenster mit dem Fensterrahmen wahlweise außen oder innen auf dem Rand der Gehäuseöffnung aufliegt.

Für einen Betrieb des Detektormoduls unter einem äußeren Überdruck bzw. einem inneren Unterdruck ist es vorteilhaft, wenn das Strahlungseintrittsfenster mit dem Fensterrahmen außen auf dem Rand der Gehäuseöffnung aufliegt, da das Strahlungseintrittsfenster dann aufgrund der Druckverhältnisse auf die Gehäuseöffnung gepresst wird.

Für einen Betrieb des Detektormoduls unter einem inneren Überdruck bzw. einem äußeren Unterdruck ist es dagegen vorteilhaft, wenn das Strahlungseintrittsfenster innen auf dem Rand der Gehäuseöffnung aufliegt, da das Strahlungseintrittsfenster dann aufgrund der Druckverhältnisse gegen den Rand der Gehäuseöffnung gepresst wird.

Schließlich ist noch zu erwähnen, dass die Erfindung auch ein komplettes Messgerät mit einem derartigen Detektormodul umfasst. Beispielsweise kann es sich bei dem Messgerät um ein energie- oder wellenlängen-dispersives Spektrometer handeln, das insbesondere zur Röntgenspektroskopie oder zur Röntgenfluoreszenzanalyse dient, oder um ein Diffraktometer zur Aufnahme von Beugungsbildern, oder um eine Röntgen-Farb-Kamera, die zeitlich und räumlich aufgelöste Röntgenaufnahmen nimmt.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht eines erfindungsgemäßen Detektormoduls mit einem neuartigen Strahlungseintrittsfenster gemäß der Erfindung,
- Figur 2A: eine Detailansicht des Fensterrahmens aus Figur 1 im Querschnitt,
- Figur 2B: eine Abwandlung von Figur 2A,
- Figur 3: eine Aufsicht auf ein nicht erfindungsgemäßes Strahlungseintrittsfenster mit einer relativ kleinen Fensteröffnung,
- Figur 4A: eine Aufsicht auf ein erfindungsgemäßes Strahlungseintrittsfenster mit einer größeren Fensteröffnung und einem Stützsteg,
- Figur 4B: eine Querschnittsansicht des Strahlungseintrittsfensters gemäß Figur 4A,
- Figur 5A: eine Aufsicht auf ein erfindungsgemäßes Strahlungseintrittsfenster mit einer noch größeren Fensteröffnung und zwei kreuzförmig angeordneten Stützstegen, sowie
- Figur 5B: einen Querschnitt durch das Strahlungseintrittsfenster gemäß Figur 5A.
- Figuren 6A-6D: eine mögliche Prozessfolge im Rahmen der Planartechnologie zur Herstellung des erfindungsgemäßen Strahlungseintrittsfensters.

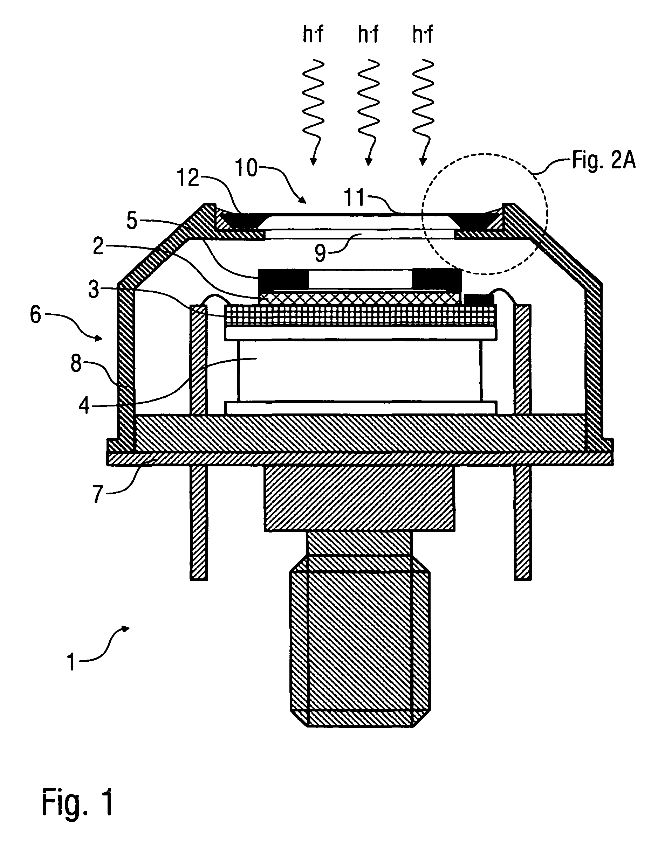

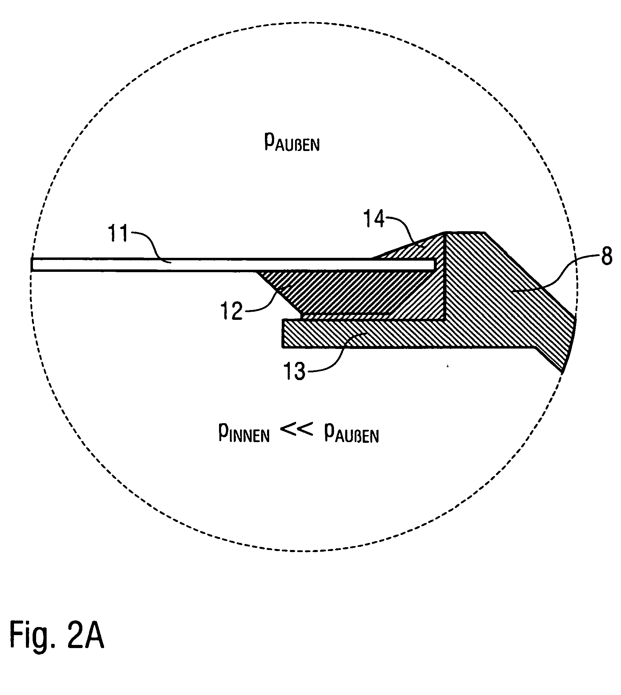

Die Figuren 1 und 2A zeigen ein erfindungsgemäßes Detektormodul 1, das beispielsweise in einem Röntgenspektrometer zur Röntgenfluoreszenzspektroskopie eingesetzt werden kann, was an sich aus dem Stand der Technik bekannt ist und deshalb nicht näher beschrieben werden muss.

Das Detektormodul 1 weist zur Strahlungsdetektion einen Halbleiterdriftdetektor 2 auf, der auf einem Keramiksubstrat 3 angeordnet ist, wobei das Keramiksubstrat 3 und damit auch der Halbleiterdriftdetektor 2 von einem Peltier-Element 4 gekühlt werden kann, um im Betrieb eine möglichst konstante Betriebstemperatur des Halbleiterdriftdetektors 2 zu erreichen. An der Oberseite des Halbleiterdriftdetektors 2 befindet sich ein Kollimator 5, der aus der hier nur schematisch als Wellenlinien gezeigten einfallenden Strahlung ein Strahlenbündel erzeugt, das auf den Halbleiterdriftdetektor 3 auftrifft.

Die vorstehend genannten Bauelemente des Detektormoduls 1 sind innerhalb eines gasdichten Gehäuses 6 hermetisch gekapselt angeordnet, wobei das Gehäuse 6 im Wesentlichen aus einer Bodenplatte 7 und einem kuppelförmigen Gehäuseelement 8 besteht, das auf die Bodenplatte 7 aufgesetzt ist.

An seiner Oberseite weist das kuppelförmige Gehäuseelement 8 eine Gehäuseöffnung 9 auf, wobei die Gehäuseöffnung 9 von einem erfindungsgemäßen Strahlungseintrittsfenster 10 gasdicht verschlossen wird, wobei das Strahlungseintrittsfenster 10 für die zu detektierende Röntgenstrahlung durchlässig ist, wohingegen das Strahlungseintrittsfenster 10 für optische Strahlung, insbesondere in einem für den Menschen sichtbaren Wellenlängenbereich, undurchsichtig ist.

Das erfindungsgemäße Strahlungseintrittsfenster 10 besteht im Wesentlichen aus einem flachen, ebenen und dünnen Fensterelement 11, das seitlich von einem wesentlich dickeren Fensterrahmen 12 aus einem Halbleitermaterial (z.B. Silizium) eingerahmt wird. Das dünne Fensterelement 11 besteht aus Planarschichten, die mit der an sich bekannten Planartechnologie auf das Halbleitermaterial des Fensterrahmens 12 aufgewachsen oder aufgebracht werden können. Diese Planarschichten können auch als Ätzstopp dienen, wenn das Halbleitersubstrat bei der Formung des Fensterrahmens 12 teilweise weggeätzt wird. In diesem Ausführungsbeispiel werden dielektrische Planarschichten verwendet, wie sie in der Planartechnologie üblich sind (z.B. Siliziumdioxid, Siliziumnitrid oder Polymere). Hierbei ist zu erwähnen, dass die Planarschichten, die das dünne Fensterelement 11 bilden, vor dem Ätzen aufgebracht werden können.

Zur mechanischen Aufnahme des Strahlungseintrittsfensters 10 weist das kuppelförmige Gehäuseelement um die Gehäuseöffnung 9 herum einen umlaufenden Rand 13 auf, wobei das Strahlungseintrittsfenster 10 außen auf dem Rand 13 der Gehäuseöffnung 9 aufliegt und durch eine Klebeverbindung 14 mit dem kuppelförmigen Gehäuseelement 8 verbunden ist. Dies bietet den Vorteil, dass das Strahlungseintrittsfenster 10 bei einem äußeren Überdruck aufgrund der Druckverhältnisse von außen gegen den Rand 13 der Gehäuseöffnung 9 gepresst wird.

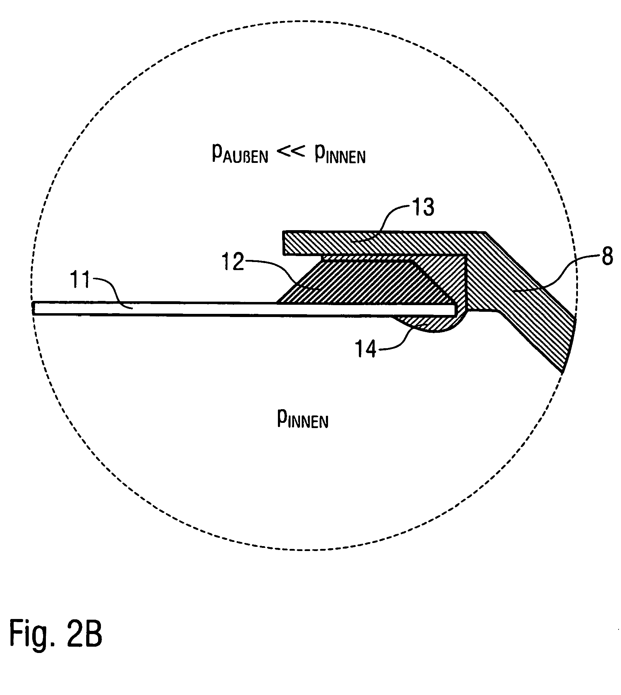

Figur 2B zeigt eine Abwandlung der Detailansicht aus Figur 2A, so dass zur Vermeidung von Wiederholungen auf die vorstehende Beschreibung verwiesen wird, wobei für entsprechende Einzelheiten dieselben Bezugszeichen verwendet werden.

Die Besonderheit dieser Abwandlung besteht im Wesentlichen darin, dass das Strahlungseintrittsfenster 10 innen auf dem Rand 13 der Gehäuseöffnung 9 aufliegt. Dies ist bei einem inneren Überdruck in dem Gehäuse 6 vorteilhaft, weil das Strahlungseintrittsfenster 10 dann aufgrund der Druckverhältnisse von innen gegen den Rand 13 der Gehäuseöffnung 9 gepresst wird.

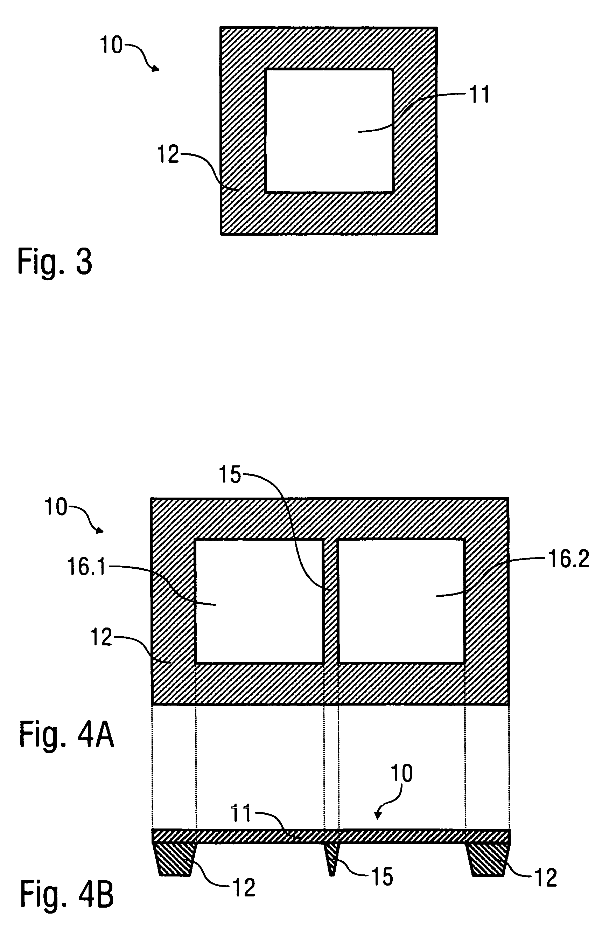

Figur 3 zeigt eine Aufsicht auf ein nicht erfindungsgemäßes Strahlungseintrittsfenster 10, das teilweise mit dem vorstehend beschriebenen Ausführungsbeispiel übereinstimmt, so dass zur Vermeidung von Wiederholungen auf die vorstehende Beschreibung verwiesen wird, wobei für entsprechende Einzelheiten dieselben Bezugszeichen verwendet werden.

Zu diesem Ausführungsbeispiel ist zu erwähnen, dass der Fensterrahmen 12 und das dünne Fensterelement 11 rechteckig sind.

Weiterhin ist zu diesem Ausführungsbeispiel zu erwähnen, dass das Strahlungseintrittsfenster 10 eine relativ kleine Fensteröffnung aufweist, so dass das dünne Fensterelement 11 in seiner freien Fläche nicht mechanisch abgestützt werden muss.

Die Figuren 4A und 4B zeigen eine Abwandlung des Strahlungseintrittsfensters 10 gemäß Figur 3, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass das Strahlungseintrittsfenster 10 eine wesentliche größere Fensteröffnung aufweist, so dass eine mechanische Abstützung durch einen mittig angeordneten Stützsteg 15 erforderlich ist, wobei der Stützsteg 15 aus dem selben Material besteht wie der Fensterrahmen 12 und das dünne Fensterelement 11 in zwei Fensteröffnungen 16.1, 16.2 unterteilt.

Aus der Querschnittsansicht in Figur 4B ist weiterhin ersichtlich, dass sowohl der Fensterrahmen 12 als auch der Stützsteg 15 einen trapezförmigen Querschnitt aufweisen, wobei sich der Querschnitt zu dem dünnen Fensterelement 11 hin verbreitert, was durch die Herstellung gemäß der Planartechnologie bedingt ist.

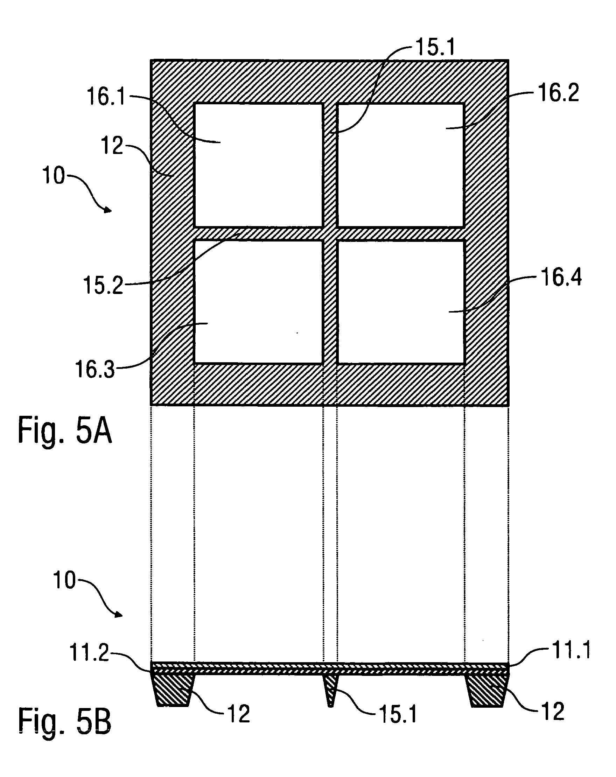

Die Figuren 5A und 5B zeigen eine Abwandlung des Ausführungsbeispiels gemäß den Figuren 4A und 4B, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht in der wesentlich größeren Fensterfläche, die eine mechanische Abstützung durch zwei kreuzförmig angeordnete Stützstege 15.1, 15.2 erfordern, wobei die Stützstege 15.1, 15.2 insgesamt vier benachbarte Fensteröffnungen 16.1-16.4 unterteilen.

Darüber hinaus ist aus dieser Darstellung ersichtlich, dass das dünne Fensterelement 11 aus zwei übereinander liegenden Planarschichten 11.1, 11.2 besteht, die aus unterschiedlichen Materialien bestehen.

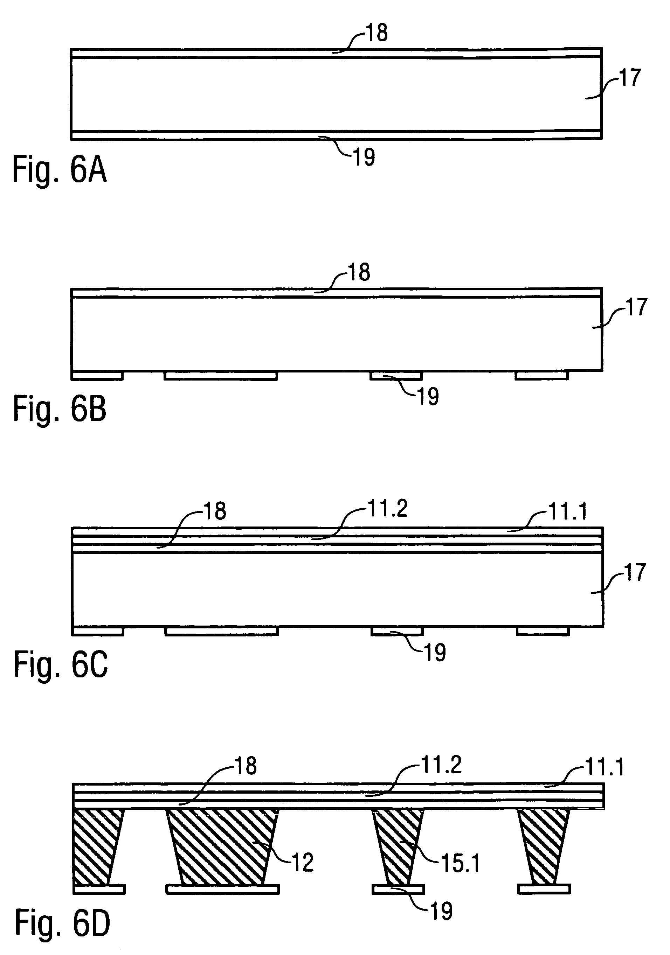

Figur 6 zeigt einen möglichen Herstellungsprozess im Rahmen der Planartechnologie am Beispiel eines Silizium-Wafers. Hierbei werden für entsprechende Einzelheiten dieselben Bezugszeichen verwendet wie in der vorstehenden Beschreibung, so dass zur Vermeidung von Wiederholungen auf die vorstehende Beschreibung verwiesen wird.

In einem ersten Schritt (Fig. 6A) wird ein Wafer 17 thermisch oxidiert, so dass der Wafer 17 beidseitig mit einer Oxidschicht 18, 19, beschichtet ist.

Im zweiten Schritt (Fig. 6B) wird die Oxidschicht 19 an der zukünftigen Rahmenseite (in der Zeichnung unten) strukturiert, so dass nur mehr zukünftige Fensterrahmen 12 und Stützstege 15.1 bedeckt bleiben.

Danach werden einseitig auf der zukünftigen Fensterseite (in der Zeichnung oben) oder doppelseitig weitere Schichte(n) 11.1, 11.2 aufgebracht (Fig. 6C).

Nach Entfernen der zusätzlichen Schichten auf der Rahmenseite kann der Wafer 17 nasschemisch geätzt werden, wobei die strukturierte Oxidschicht 19 als Ätzmaske dient. Die Oxidschicht 18 an der Fensterseite dient dabei als Ätzstop, so dass im Fensterbereich nur das Oxid, sowie die darüber aufgebrachten dünnen Schichten 11.1, 11.2 vorhanden sind (Fig. 6D, nicht erfindungsgemäß). Es bleibt zu erwähnen, dass sowohl isotrope als auch anisotrope Ätzverfahren angewendet werden können.

Im Rahmen des Herstellungsprozesses erfolgt auch eine Vereinzelung der einzelnen Strahlungseintrittsfenster 10 von einem Nutzen, der bei der Herstellung mehrere Strahlungseintrittsfenster umfasst. Diese Vereinzelung erfolgt ebenfalls während des Ätzens in demselben Ätzschritt. Hierbei wird die Geometrie vor dem Ätzen durch eine geeignete Maske definiert.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darunter fallen auch Abwandlungen in der Geometrie der Fenster und der Stützstruktur. So mag es in manchen Fällen vorteilhaft sein, nicht rechtwinkelige, runde oder hexagonale Strukturen zu verwenden. Darüber hinaus beansprucht die Erfindung auch Schutz für den Gegenstand der Unteransprüche unabhängig von den Merkmalen der in Bezug genommenen Ansprüche.

### Bezugszeichenliste:

- 1: Detektormodul
- 2: Halbleiterdriftdetektor
- 3: Keramiksubstrat
- 4: Peltier-Element
- 5: Kollimator
- 6: Gehäuse
- 7: Bodenplatte
- 8: Kuppelförmiges Gehäuseelement
- 9: Gehäuseöffnung
- 10: Strahlungseintrittsfenster
- 11: Fensterelement
- 11.1, 11.2: Planarschichten
- 12: Fensterrahmen
- 13: Rand der Gehäuseöffnung
- 14: Klebeverbindung
- 15, 15.1, 15.2: Stützsteg
- 16.1-16.4: Fensteröffnung
- 17: Wafer
- 18: Oxidschicht
- 19: Oxidschicht

## Patentansprüche

1. Strahlungseintrittsfenster (10) für einen Strahlungsdetektor (2), insbesondere für einen Halbleiterdetektor, wie beispielsweise einen Halbleiterdriftdetektor (2), einen Halbleiterpixeldetektor oder einen CCD-Detektor, mit
a) einem flachen Fensterelement (11), das für die von dem Strahlungsdetektor (2) zu detektierende Strahlung mindestens teilweise durchlässig ist,
b) einem das Fensterelement (11) seitlich einrahmenden Fensterrahmen (12), wobei der Fensterrahmen (12)
b1) aus einem Halbleitermaterial besteht und wesentlich dicker ist als das Fensterelement (11), und
b2) in Planartechnologie in einem Halbleiterprozess hergestellt ist, und
b3) quasi-monolithisch mit dem Fensterelement (11) verbunden ist,
**dadurch gekennzeichnet,**
c) **dass** der Fensterrahmen (12) im Querschnitt ein Profil aufweist, das sich zu dem Fensterelement (11) hin in Form eines gleichschenkligen Trapezes erweitert.

2. Strahlungseintrittsfenster (10) nach Anspruch 1, **dadurch gekennzeichnet,**
a) **dass** das flache Fensterelement (11) aus einer einzigen Planarschicht besteht, oder
b) **dass** das flache Fensterelement (11) mehrere verschiedene, übereinander liegenden Planarschichten (11.1, 11.2) aufweist.

3. Strahlungseintrittsfenster (10) nach Anspruch 2, **dadurch gekennzeichnet,**
a) **dass** die mindestens eine Planarschicht (11.1, 11.2) auf das Halbleitermaterial des Fensterrahmens (12) aufgewachsen oder aufgebracht ist, und/oder
b) **dass** die Planarschicht (11.1, 11.2) oder zumindest eine der Planarschichten (11.1, 11.2) dielektrisch sind.

4. Strahlungseintrittsfenster (10) nach Anspruch 2 oder 3, **dadurch gekennzeichnet, dass** die Planarschicht (11.1, 11.2) mindestens teilweise aus einem der folgenden Materialien bestehen:
a) Siliziumdioxid,
b) Siliziumnitrid,
c) Bis-Benzocyclobuten,
d) Ormocer
e) Polyimide
f) organisches Material,
g) anorganisches Material,
h) Halbleitermaterial.

5. Strahlungseintrittsfenster (10) nach einem der vorhergehenden Ansprüche, **dadurch gekennzeichnet, dass** das flache Fensterelement (11) durch mindestens einen Stützsteg (15, 15.1, 15.2) mechanisch abgestützt wird.

6. Strahlungseintrittsfenster (10) nach Anspruch 5, **dadurch gekennzeichnet,**
a) **dass** der Stützsteg (15, 15.1, 15.2) das flache Fensterelement (11) in mehrere Fensteröffnungen (16.1-16.4) unterteilt, und/oder
b) **dass** der Stützsteg (15, 15.1, 15.2) monolithisch mit dem Fensterrahmen (12) verbunden ist, und/oder
c) **dass** der Stützsteg (15, 15.1, 15.2) aus dem Halbleitermaterial des Fensterrahmens (12) besteht, und/oder
d) **dass** der Stützsteg (15, 15.1, 15.2) an einer Seite auf dem flachen Fensterelement (11) aufliegt und einen Querschnitt aufweist, der sich zu dem flachen Fensterelement (11) hin verbreitert, oder
e) **dass** der Stützsteg (15, 15.1, 15.2) einen Querschnitt aufweist, der im Wesentlichen rechteckig ist.

7. Strahlungseintrittsfenster (10) nach einem der vorhergehenden Ansprüche, **dadurch gekennzeichnet,**
a) **dass** das Halbleitermaterial des Fensterrahmens (12) Silizium ist, und/oder
b) **dass** das Strahlungseintrittsfenster (10) im Wesentlichen gasdicht ist.

8. Strahlungseintrittsfenster (10) nach einem der vorhergehenden Ansprüche, **dadurch gekennzeichnet,**
a) **dass** das Strahlungseintrittsfenster (10) für optische Strahlung, insbesondere in einem für den Menschen sichtbaren Wellenlängenbereich, im Wesentlichen undurchlässig ist, und/oder
b) **dass** das Strahlungseintrittsfenster (10) für Röntgenstrahlung im Wesentlichen durchlässig ist.

9. Detektormodul (1), insbesondere für ein Spektrometer, insbesondere für eine Röntgenspektroskopie oder eine Röntgenfluoreszenzanalyse, mit
a) einem Strahlungsdetektor (2), insbesondere einem Halbleiterdetektor, wie beispielsweise einem Halbleiterdriftdetektor (2), einem Halbleiterpixeldetektor oder einem CCD-Detektor, zur Detektion von Strahlung,
b) einem Gehäuse (6, 7, 8) mit einem Strahlungseintrittsfenster (10), wobei der Strahlungsdetektor (2) in dem Gehäuse (6, 7, 8) angeordnet ist und die zu detektierende Strahlung von außen durch das Strahlungseintrittsfenster (10) hindurch auf den Strahlungsdetektor (2) trifft,
**dadurch gekennzeichnet,**
c) **dass** das Strahlungseintrittsfenster (10) nach einem der vorhergehenden Ansprüche ausgebildet ist.

10. Detektormodul (1) nach Anspruch 9, **dadurch gekennzeichnet, dass** das Strahlungseintrittsfenster (10) durch eine Klebeverbindung (14) mit dem Gehäuse (6, 7, 8) des Detektormoduls verbunden ist, wobei die Klebeverbindung (14) den Fensterrahmen (12) und/oder das flache Fensterelement (11) erfasst.

11. Detektormodul (1) nach einem der Ansprüche 9 oder 10, **dadurch gekennzeichnet,**
a) **dass** das Gehäuse (6, 7, 8) eine Gehäuseöffnung (9) mit einem umlaufenden Rand (13) aufweist, und
b) **dass** das Strahlungseintrittsfenster (10) mit dem Fensterrahmen (12) außen auf dem Rand (13) der Gehäuseöffnung (9) aufliegt, so dass das Strahlungseintrittsfenster (10) bei einem äußeren Überdruck auf die Gehäuseöffnung (9) gepresst wird, oder
c) **dass** das Strahlungseintrittsfenster (10) mit dem Fensterrahmen (12) innen auf dem Rand (13) der Gehäuseöffnung (9) aufliegt, so dass das Strahlungseintrittsfenster (10) bei einem inneren Überdruck auf die Gehäuseöffnung (9) gepresst wird.

12. Spektrometer, insbesondere zur Röntgenspektroskopie oder zur Röntgenfluoreszenzanalyse, mit mindestens einem Detektormodul (1) nach einem der Ansprüche 9 bis 11.

13. Herstellungsverfahren für ein Strahlungseintrittsfenster (10) nach einem der Ansprüche 1 bis 8 für einen Strahlungsdetektor (2), insbesondere für einen Halbleiterdetektor (2) nach einem der vorhergehenden Ansprüche, mit den folgenden Schritten:
a) Bereitstellung eines Halbleiter-Wafers (17) aus einem Halbleitermaterial,
b) Beschichten des Halbleiter-Wafers (17) mit einer Schicht (18) auf der zukünftigen Fensterseite,
c) Beschichten des Halbleiter-Wafers (17) mit einer Schicht (19) auf der zukünftigen Rahmenseite,
d) Strukturieren einer der beiden Schichten (18, 19), so dass nur ein aus dem Halbleitermaterial bestehender zukünftiger Fensterrahmen (12) und optional ein aus dem Halbleitermaterial bestehender zukünftiger Stützsteg (15.1) bedeckt bleibt,
e) Entfernen des Bereichs des Halbleiter-Wafers (17), der nach dem Strukturieren unbedeckt ist, so dass der zukünftige Fensterrahmen (12) und optional der zukünftige Stützsteg (15.1) stehen bleibt und dazwischen das flache Fensterelement (11.1, 11.2) liegt,
f) Vereinzeln des Strahlungseintrittsfensters (10) von einem mehrere Strahlungseintrittsfenster (10) umfassenden Nutzen,
**dadurch gekennzeichnet,**
g) **dass** der Fensterrahmen (12) im Querschnitt ein Profil aufweist, das sich zu dem Fensterelement (11.1, 11.2) hin in Form eines gleichschenkligen Trapezes erweitert.

## Claims

1. A radiation entry window (10) for a radiation detector (2), in particular for a semiconductor detector, such as a semiconductor drift detector (2), a semiconductor pixel detector or a CCD detector, with
a) a flat window element (11), which is at least partially permeable for the radiation to be detected by the radiation detector (2),
b) a window frame (12), which laterally frames the window element (11), wherein the window frame (12)
b1) consists of a semiconductor material and is considerably thicker than the window element (11), and
b2) is manufactured in planar technology in a semiconductor process, and
b3) is connected quasi monolithically with the window element (11),
**characterized in that**
c) the window frame (12) has a cross-section profile, which widens towards the window element (11) in the form of an equal-sided trapezoid.

2. The radiation entry window (10) according to claim 1, **characterized in that**
a) the flat window element (11) consists of a single planar layer, or
b) the flat window element (11) has a plurality of different planar layers (11.1, 11.2), which lie one above the other.

3. The radiation entry window (10) according to Claim 2, **characterized in that**
a) the at least one planar layer (11.1, 11.2) is epitaxially grown on or applied onto the semiconductor material of the window frame (12), and/or
b) the planar layer (11.1, 11.2) or at least one of the planar layers (11.1, 11.2) are dielectric.

4. The radiation entry window (10) according to Claim 2 or 3, **characterized in that** the planar layer (11.1, 11.2) consists at least partially of one of the following materials:
a) Silicon dioxide
b) Silicon nitride
c) bis-benzocyclobutene,
d) ormocer
e) polyimides
f) organic material,
g) inorganic material,
h) semiconductor material.

5. The radiation entry window (10) according to any one of the preceding claims, **characterized in that** the flat window element (11) is mechanically supported by at least one supporting web (15, 15.1, 15.2).

6. The radiation entry window (10) according to claim 5, **characterized in that**
a) the supporting web (15, 15.1, 15.2) divides the flat window element (11) into a plurality of window openings (16.1-16.4), and/or
b) the supporting web (15, 15.1, 15.2) is connected monolithically with the window frame (12), and/or
c) the supporting web (15, 15.1, 15.2) consists of the semiconductor material of the window frame (12), and/or
d) the supporting web (15, 15.1, 15.2) lies on one side on the flat window element (11) and has a cross section, which widens in the direction of the flat window element (11), or
e) the supporting web (15, 15.1, 15.2) has a cross section, which is essentially rectangular.

7. The radiation entry window (10) according to any one of the preceding claims, **characterized in that**
a) the semiconductor material of the window frame (12) is silicon, and/or
b) the radiation entry window (10) is essentially gas-tight.

8. The radiation entry window (10) according to any one of the preceding claims, **characterized in that**
a) the radiation entry window (10) is not permeable for optical radiation, in particular in a wavelength range, which is visible for humans, and/or
b) the radiation entry window (10) is essentially permeable for X-ray radiation.

9. A detector module (1), in particular for a spectrometer, in particular for a X-ray spectroscopy or a X-ray fluorescence analysis, with
a) a radiation detector (2), in particular a semiconductor detector, such as a semiconductor drift detector (2), a semiconductor pixel detector or a CCD detector, for the detection of radiation,
b) a housing (6, 7, 8) with a radiation entry window (10), wherein the radiation detector (2) is arranged in the housing (6, 7, 8) and the radiation to be detected passes from the outside through the radiation entry window (10) onto den radiation detector (2),
**characterized in that**
c) the radiation entry window (10) is formed according to any one of the preceding claims.

10. The detector module (1) according to Claim 9, **characterized in that** the radiation entry window (10) is connected by an adhesive joint (14) with the housing (6, 7, 8) of the detector module, wherein the adhesive joint (14) detects the window frame (12) and/or the flat window element (11).

11. The detector module (1) according to any one of Claims 9 or 10, **characterized in that**
a) the housing (6, 7, 8) has one housing opening (9) with a circumferential edge (13), and
b) the radiation entry window (10) lies with the window frame (12) outside on the edge (13) of the housing opening (9) so that the radiation entry window (10) is pressed at an external overpressure onto the housing opening (9), or
c) the radiation entry window (10) lies with the window frame (12) inside on the edge (13) of the housing opening (9) so that the radiation entry window (10) is pressed at an internal overpressure onto the housing opening (9).

12. A spectrometer, in particular for X-ray spectroscopy or for X-ray fluorescence analysis, with at least one detector module (1) according to any one of Claims 9 to 11.

13. A manufacturing method for a radiation entry window (10) according to any one of Claims 1 to 8 for a radiation detector (2), in particular for a semiconductor detector (2) according to any one of the preceding claims, with the following steps:
a) providing a semiconductor wafer (17) made of a semiconductor material,
b) coating the semiconductor wafer (17) with a layer (18) on the intended window side,
c) coating the semiconductor wafer (17) with a layer (19) on the intended frame side,
d) structuring one of both layers (18, 19) so that only one future window frame (12) made of the semiconductor material and optionally only a future supporting web (15.1) made of the semiconductor material remains covered,
e) removing the area of the semiconductor wafer (17), which is not covered after structuring so that the future window frame (12) and optionally the future supporting web (15.1) stands still, and the flat window element (11.1, 11.2) is in between,
f) separating the radiation entry windows (10) from a panel comprising several radiation entry windows (10),
**characterized in that**
g) the window frame (12) has a cross-section profile, which widens towards the window element (11) in the form of an equal-sided trapezoid.

## Revendications

1. Fenêtre d'entrée de rayonnement (10) pour un détecteur de rayonnement (2), en particulier pour un détecteur à semi-conducteur, tel que par exemple un détecteur de dérive à semi-conducteur (2), un détecteur de pixel à semi-conducteur ou un détecteur CCD avec
a) un élément de fenêtre plat (11) qui est au moins en partie perméable au rayonnement à détecter par le détecteur de rayonnement (2),
b) un cadre de fenêtre (12) encadrant latéralement l'élément de fenêtre (11), le cadre de fenêtre (12)
b1) se composant d'un matériau semi-conducteur et étant sensiblement plus épais que l'élément de fenêtre (11) et
b2) étant fabriqué dans la technologie planaire dans un processus à semi-conducteur, et
b3) étant relié de manière quasi-monolithique à l'élément de fenêtre (11),
**caractérisée en ce que**
c) le cadre de fenêtre (12) présente en section transversale un profil qui s'élargit vers l'élément de fenêtre (11) sous la forme d'un trapèze isocèle.

2. Fenêtre d'entrée de rayonnement (10) selon la revendication 1, **caractérisée en ce que**
a) l'élément de fenêtre plat (11) se compose d'une seule couche planaire ou
b) l'élément de fenêtre plat (11) présente plusieurs couches planaires (11.1, 11.2) différentes, se trouvant l'une au-dessus de l'autre.

3. Fenêtre d'entrée de rayonnement (10) selon la revendication 2, **caractérisée en ce que**
a) l'au moins une couche planaire (11.1, 11.2) a grandi ou est appliquée sur le matériau semi-conducteur du cadre de fenêtre (12) et/ou
b) la couche planaire (11.1, 11.2) ou au moins l'une des couches planaires (11.1, 11.2) est diélectrique.

4. Fenêtre d'entrée de rayonnement (10) selon la revendication 2 ou 3, **caractérisée en ce que** la couche planaire (11.1, 11.2) se compose au moins en partie de l'un des matériaux suivants :
a) dioxyde de silicium,
b) nitrure de silicium,
c) bis-benzocyclobutène,
d) ormocer,
e) polyamide,
f) matériau organique,
g) matériau anorganique,
h) matériau semi-conducteur.

5. Fenêtre d'entrée de rayonnement (10) selon l'une quelconque des revendications précédentes, **caractérisée en ce que** l'élément de fenêtre plat (11) est en appui mécanique par au moins une nervure d'appui (15, 15.1, 15.2).

6. Fenêtre d'entrée de rayonnement (10) selon la revendication 5, **caractérisée en ce que**
a) la nervure d'appui (15, 15.1, 15.2) divise l'élément de fenêtre plat (11) en plusieurs ouvertures de fenêtre (16.1-16.4) et/ou
b) la nervure d'appui (15, 15.1, 15.2) est reliée par voie monolithique au cadre de fenêtre (12) et/ou
c) la nervure d'appui (15, 15.1, 15.2) se compose du matériau semi-conducteur du cadre de fenêtre (12) et/ou
d) la nervure d'appui (15, 15.1, 15.2) repose sur un côté sur l'élément de fenêtre plat (11) et présente une section transversale qui s'élargit vers l'élément de fenêtre plat (11) ou
e) la nervure d'appui (15, 15.1, 15.2) présente une section transversale qui est sensiblement rectangulaire.

7. Fenêtre d'entrée de rayonnement (10) selon l'une quelconque des revendications précédentes, **caractérisée en ce que**
a) le matériau semi-conducteur du cadre de fenêtre (12) est du silicium et/ou
b) la fenêtre d'entrée de rayonnement (10) est sensiblement étanche aux gaz.

8. Fenêtre d'entrée de rayonnement (10) selon l'une quelconque des revendications précédentes, **caractérisée en ce que**
a) la fenêtre d'entrée de rayonnement (10) est sensiblement imperméable à un rayonnement optique, en particulier dans une plage de longueur d'ondes visible pour les hommes et/ou
b) la fenêtre d'entrée de rayonnement (10) est sensiblement perméable au rayonnement X.

9. Module détecteur (1), en particulier pour un spectromètre, en particulier pour une spectroscopie aux rayons X ou une analyse fluorescente aux rayons X avec
a) un détecteur de rayonnement (2), en particulier un détecteur à semi-conducteur tel qu'un détecteur de dérive à semi-conducteur (2), un détecteur de pixel à semi-conducteur ou un détecteur CCD pour la détection de rayonnement,
b) un boîtier (6, 7, 8) avec une fenêtre d'entrée de rayonnement (10), le détecteur de rayonnement (2) étant agencé dans le boîtier (6, 7, 8) et le rayonnement à détecter touchant le détecteur de rayonnement (2) de l'extérieur par la fenêtre d'entrée de rayonnement (10),
**caractérisé en ce que**
c) la fenêtre d'entrée de rayonnement (10) est réalisée selon l'une quelconque des revendications précédentes.

10. Module détecteur (1) selon la revendication 9, **caractérisé en ce que** la fenêtre d'entrée de rayonnement (10) est reliée par une liaison de collage (14) au boîtier (6, 7, 8) du module détecteur, la liaison de collage (14) saisissant le cadre de fenêtre (12) et/ou l'élément de fenêtre plat (11).

11. Module détecteur (1) selon l'une quelconque des revendications 9 ou 10, **caractérisé en ce que**
a) le boîtier (6, 7, 8) présente une ouverture de boîtier (9) avec un bord tournant (13) et
b) la fenêtre d'entrée de rayonnement (10) repose avec le cadre de fenêtre (12) à l'extérieur sur le bord (13) de l'ouverture de boîtier (9) de sorte que la fenêtre d'entrée de rayonnement (10) soit pressée en cas de surpression extérieure sur l'ouverture de boîtier (9) ou
c) la fenêtre d'entrée de rayonnement (10) repose avec le cadre de fenêtre (12) à l'intérieur sur le bord (13) de l'ouverture de boîtier (9) de sorte que la fenêtre d'entrée de rayonnement (10) soit pressée en cas de surpression intérieure sur l'ouverture de boîtier (9).

12. Spectromètre en particulier pour la spectroscopie à rayons X ou pour l'analyse de fluorescence à rayons X avec au moins un module détecteur (1) selon l'une quelconque des revendications 9 à 11.

13. Procédé de fabrication pour une fenêtre d'entrée de rayonnement (10) selon l'une quelconque des revendications 1 à 8 pour un détecteur de rayonnement (2), en particulier pour un détecteur à semi-conducteur (2) selon l'une quelconque des revendications précédentes, avec les étapes suivantes :
a) la mise à disposition d'une tranche de semi-conducteur (17) en un matériau semi-conducteur,
b) le revêtement de la tranche de semi-conducteur (17) avec une couche (18) sur le futur côté de fenêtre,
c) le revêtement de la tranche de semi-conducteur (17) avec une couche (19) sur le futur côté de cadre,
d) la structuration d'une des deux couches (18, 19) de sorte qu'un seul cadre de fenêtre (12) futur se composant du matériau semi-conducteur et en option une future nervure d'appui (15.1) se composant du matériau semi-conducteur restent couverts,
e) le retrait de la zone de la tranche de semi-conducteur (17) qui n'est pas couverte après la structuration de sorte que le futur cadre de fenêtre (12) et en option la future nervure d'appui (15.1) restent immobiles et l'élément de fenêtre plat (11.1, 11.2) se trouve au milieu,
f) la séparation de la fenêtre d'entrée de rayonnement (10) d'un flan comportant plusieurs fenêtres d'entrée de rayonnement (10),
**caractérisé en ce que**
g) le cadre de fenêtre (12) présente en section transversale un profil qui s'élargit vers l'élément de fenêtre (11.1, 11.2) sous la forme d'un trapèze isocèle.
